Europäisches Patentamt

(19) European Patent Office

Office européen des brevets

(11) Veröffentlichungsnummer: **0 093 340**
A2

(12) **EUROPÄISCHE PATENTANMELDUNG**

(21) Anmeldenummer: 83103911.0

(22) Anmeldetag: 21.04.83

(51) Int. Cl.³: **F 15 B 13/043**
G 05 D 7/06

(30) Priorität: 05.05.82 DE 3216693

(43) Veröffentlichungstag der Anmeldung:
09.11.83 Patentblatt 83/45

(84) Benannte Vertragsstaaten:
CH DE FR GB IT LI SE

(71) Anmelder: Kienzle Apparate GmbH
Heinrich-Hertz-Strasse
D-7730 Villingen-Schwenningen(DE)

(72) Erfinder: Goedecke, Wolf-Dieter
Bachweg 12
D-7731 Unterkirnach(DE)

(72) Erfinder: Schneckenburger, Gerhard
Hochstrasse 6
D-7713 Hüfingen(DE)

(72) Erfinder: Schwenzer, Reinhard
Jülicher Strasse 25
D-5100 Aachen(DE)

(54) Elektropneumatisches Servoventil zur Steuerung eines Volumenstromes bzw. eines Druckes.

(57) Der Gegenstand der Erfindung bezieht sich auf ein zweistufiges, elektropneumatisches Servoventil zur Steuerung eines Volumenstromes. Das Servoventil (1, 2) besteht aus einer elektromechanisch ansteuerbaren Vorsteuerstufe (1), durch welche mit einem Düse-Prallplatte-System (22, 9) elektrische Steuersignale in pneumatischen Steuerluftdruck in einem Steuerluftraum (29) zwischen der Vorsteuerstufe (1) und einer Ventilhauptstufe (2) umgewandelt werden. Der variabel steuerbare Steuerluftdruck im Steuerluftraum (29) dient als Stellkraft zur Positionierung eines Steuerkolbens (54) in der Ventilhauptstufe (2), aufgrund welcher ein proportionaler Volumenstrom an einem Arbeitsausgang (A) einstellbar ist.

Das elektro-pneumatische Servoventil (1, 2) dient der Umsetzung elektrischer Steuersignale kleiner Leistung zur Steuerung eines relativ großen Volumenstromes für den Betrieb pneumatischer Antriebe.

FIG. 1

3o.o4.19 0293340
o73 sche zw
Akte 1774

Elektropneumatisches Servoventil zur Steuerung eines Volumenstromes bzw. eines Druckes

Der Gegenstand der Erfindung bezieht sich auf ein elektropneumatisches Servoventil zur Steuerung eines Volumenstromes
bzw. eines Druckes.

Unter dem Begriff eines elektropneumatischen Servoventils
soll ganz allgemein eine Einrichtung bzw. ein Ventil verstanden werden zur analogen Steuerung eines Luftstromes oder Luftdruckes aufgrund der Eingabe eines entsprechenden elektrischen Signales. Voraussetzung dabei ist es zu erreichen, daß
einem bestimmten elektrischen Eingangssignal am Ausgang des
Servoventils eindeutig ein entsprechender Druck- oder Volumenstrom zugeordnet werden kann. Im Vordergrund eines derartigen elektropneumatischen Umformers schließlich steht das
Ziel einer möglichst großen, analogen Verstärkung des Eingangssignals. Dies bedeutet in der Praxis, daß z. B. mit
einem möglichst kleinen Eingangsstrom von ca. 2oo mA ein
Durchflußvolumen von ca. 5oo l/min. am Ventilausgang steuerbar ist. Ein derart großer Verstärkungseffekt mit möglichst
geringer Leistungsaufnahme auf der Steuerungseingangsseite
ist verständlicherweise in einer Zeit der sich mehr und mehr
ausbreitenden elektrischen und elektronischen Steuerungssysteme auch im Bereich der Pneumatik vom Anwender erwünscht, aber
nicht ohne weiteres erreichbar. Hierzu ist es nämlich erforderlich, alle diesbezüglich wirksamen Einflußgrößen in bezug
auf die Bauteile und die Kombinationen von Steuerungselementen unter den eigentlichen Ventilbaugruppen optimal aufeinander abzustimmen. Im wesentlichen sind elektropneumatische Ventile in zwei Bauarten unterteilbar, die sich aufgrund der
Funktionsweise als direkt betätigte und indirekt betätigte
Ventile darstellen. Beim direkt betätigten Ventil wird die Stellkraft zur Bewegung bzw. Betätigung des Ventilschließelementes direkt von einem Elektromagneten erzeugt, das heißt die steuerbaren Durchlaßvolumina oder Druckverhältnisse hängen direkt von der seitens des Magneten verfügbaren Kraft ab. Obgleich sich derartige Ventile durch einen funktionell einfachen Aufbau auszeichnen, sind zur Erzeugung großer Kräfte hohe elektrische Leistungen bei entsprechend großem Bauvolumen auf der elektrischen Ansteuerungsseite erforderlich.

Das indirekt betätigte Ventil oder Servoventil stellt sich als wenigstens zweistufiges Ventil dar, bei dem ein Elektromagnet beispielsweise ein sog. Pilotventil betätigt, das durch Druckbeaufschlagung des Steuerkolbens das Hauptventil betätigt. Ein sehr wesentlicher Vorteil bei dieser Art von Servoventilen ist darin zu sehen, daß die mit dem Hauptventil steuerbaren Durchlaßvolumina nicht von der Stellkraft des Magneten im Steuerungsteil bzw. dem Pilotventil abhängig sind. Das heißt umgekehrt, die notwendige elektrische Leistungsaufnahme für den Steuerungseffekt wird ausschließlich durch den Elektromagneten des Pilotventils bestimmt.

Aufgabe der Erfindung ist es, ein elektrisch ansteuerbares, pneumatisches Servostromventil als Signalumformer zu entwikkeln, mit dem bei einer minimalen Baugröße des Ventils mit einer geringen elektrischen Ansteuerleistung ein großes Luftstromdurchlaßvolumen unter Berücksichtigung hoher Anforderungen an das dynamische Verhalten steuerbar ist.

Diese Aufgabe wird erfindungsgemäß gelöst durch die Kombination einer elektrische Signale in pneumatischen Steuerluftdruck umsetzenden Vorsteuerstufe, mit einer durch den Steuerluftdruck der Vorsteuerstufe einstellbaren Ventilhauptstufe, dergestalt daß mittels eines durch elektrische Signale über ein Düse-Prallplatte-System in proportional pneumatischen Druck umsetzbaren Steuerluftdruckes in einem Steuerluftraum

0093340

zwischen Vorsteuerstufe und Ventilhauptstufe ein Steuerkolben der Ventilhauptstufe gegen die Wirkung einer Rückstellkraft antreibbar ist, derart daß in Abhängigkeit des Steuerluftdruckes der Steuerkolben zur Steuerung eines proportionalen Volumenstromes positionierbar ist.

Weitere Merkmale zur Ausgestaltung der Erfindung sind in den Unteransprüchen enthalten.

Das elektropneumatische Servoventil zur Steuerung eines Volumenstromes ist in einer vorteilhaften Ausführungsform gemäß der Erfindung als zweistufiges Servoventil ausgebildet, wobei sich die eine Stufe als eine elektromechanisch wirksame Vorsteuerstufe darstellt, die im wesentlichen aus einem mit elektrischen Signalen durch einen Tauchspulenmagneten einstellbaren Düse-Prallplatte-System besteht. Die andere Stufe, als Ventilhauptstufe bezeichnet, ist gemäß einem nachfolgend erläuterten Ausführungsbeispiel als 3/2 Wege-Stromventil ausgebildet und besteht im wesentlichen aus einem getrennten Gehäuse mit drei Bohrungen für die Luftstromanschlüsse, einer innenliegenden Steuerbuchse und einem in letzterer bewegbaren Steuerkolben. Je nach Lage des Steuerkolbens wird der Versorgungsdruckanschluß P über eine Ringnut im Steuerkolben mit einem Verbraucher- oder Arbeitsanschluß A über einen mehr oder weniger in Durchlaßrichtung steuerbaren Querschnitt verbunden. Die Lage bzw. Positionierung des Steuerkolbens ist direkt abhängig vom Steuerluftdruck in einem Steuerluftraum, der am oberen Ende des Steuerkolbens angeordnet ist und durch welchen der Steuerkolben gegen eine Rückstellkraft in Form einer Druckfeder antreibbar ist. Der Steuerdruck selbst wiederum ist abhängig von den der Vorsteuerstufe zugeleiteten,elektrischen Eingangsstrom- oder Spannungssignalen, die über eine dynamische Positionsveränderung der Tauchspule die seitens des Versorgungsdruckes aufgebauten Steuerdruckverhältnisse gemäß der nachfolgend dargelegten Zusammenhänge ständig steuern. Die aus dem Steuerluftdruck ableitbare Stellkraft selbst wird in vorteilhafter Weise erzeugt durch Ausnutzung des vorhandenen Versorgungsluftdruckes in P, der aufgrund der Verbindung über einen Steuerluftkanal im Steuerkolben und eine Steuerluftstromdrossel in jeder Position des Steuerkolbens in einem Steuerluftraum zwischen der Ventilhauptstufe und der Vorsteuerstufe wirksam werden kann. Der im Steuerluftraum sich ständig aufbauende Druck ist in feiner Abstufung durch eine über einer Meßdüse bewegbare Prallplatte regelbar, indem letztere durch eine Tauchspule im Luftspalt eines Ringmagneten in der Vorsteuerstufe angetrieben ihren Abstand zur Meßdüse proportional zum elektrischen Eingangssignal ändert und so den ausströmenden Steuerluftstrom dosiert. Auf diese Weise bewirkt eine durch relativ kleine elektrische Eingangssignale hervorgerufene Spulenbewegung bzw. ein Prallplattenhub eine analoge Umwandlung von elektrischen Signalen in Steuerluftdrücke, die ihrerseits als variable Stellkraft auf den Steuerkolben wirken und letzteren gegen die Rückstellkraft einer Druckfeder positionieren. Im Sinne einer analogen Verstärkung des Eingangssignales ist mit relativ kleinen elektrischen Strömen bei der Vorsteuerstufe der angezeigten Art eine steuerbare Druckbeaufschlagung des Steuerkolbens und damit eine auf diesen variabel wirksame Stellkraft zu dessen Positionseinstellung erzielbar. Der sehr wesentliche Vorteil dieser Anordnung liegt darin, daß die mit dem Steuerkolben in der Ventilhauptstufe einstellbaren Verbindungsquerschnitte des Arbeitsanschlusses A mit dem Versorgungsanschluß P bzw. mit dem Rückstromanschluß R von der Stellkraft des Tauchspulenmagneten und damit von der elektrischen Leistungsaufnahme der Vorsteuerstufe unabhängig sind. Die Leistungsaufnahme der Tauchspule wird allein bestimmt durch die Konzeption der Vorsteuerstufe inkl. des Düse-Prallplatten-Systems.

Ein Ausführungsbeispiel der Erfindung ist in der nachfolgenden Beschreibung und anhand der Zeichnungen dargestellt.

Es zeigt

FIG. 1 die Kombination einer als elektropneumatischer Signalumformer ausgebildeten Vorsteuerstufe mit einer Ventilhauptstufe zur proportionalen Steuerung eines Volumenstromes bzw. eines pneumatischen Druckes.

FIG. 2 eine Ausbildungsform der Vorsteuerstufe im Schnitt mit gleichzeitiger Ausbildung der Membranfeder als Prallplatte.

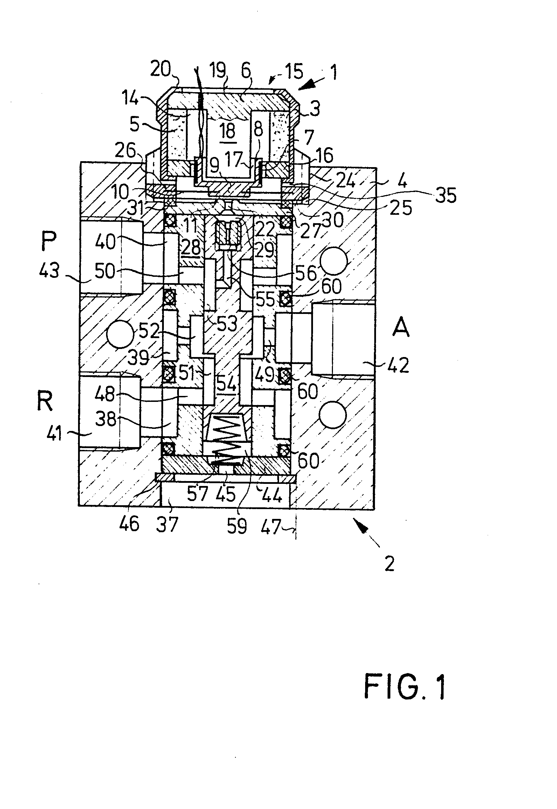

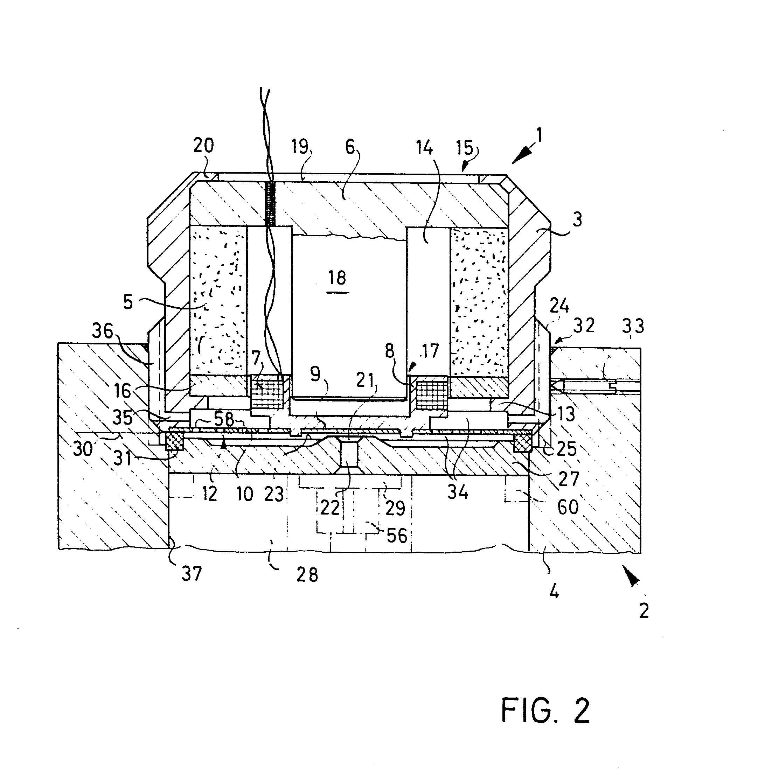

Eine Ausführungsform des elektropneumatischen Servoventils gemäß der vorbeschriebenen Art besteht aus einer Vorsteuerstufe 1 und einer Ventilhauptstufe 2, wobei die Einrichtungen der Vorsteuerstufe 1 in einem Gehäuse 3 und die Einrichtungen der Ventilhauptstufe 2 in einem separaten Gehäuse 4 untergebracht sind. Als Einrichtungen der Vorsteuerstufe 1 sind in dem Gehäuse 3 ein Permanent-Magnet 5, ein Anker 6, eine Tauchspule 7 mit einem besonders ausgebildeten Spulenkörper 8 mit einer integrierten Prallplatte 9 untergebracht. Der Spulenkörper 8 mit der Prallplatte 9 wird durch eine Membranfeder 1o getragen, indem die Prallplatte 9 in eine entsprechende Bohrung 11 in der Membranfeder 1o beispielsweise durch einen Preßsitz oder auf formschlüssige Art sich selbsthaltend aufgesteckt ist. Gemäß dem Aufbau der Vorsteuerstufe 1 nach FIG. 2 ist im zylindrischen Hohlraum 14 der Vorsteuerstufe 1 nahe der der Ventilhauptstufe 2 zugewandten Stirnseite 12 ein nach innen vorstehender Bund 13 vorgesehen. Dieser Bund 13 dient zur Auflage eines von der zunächst offenen Stirnseite 15 in den zylindrischen Hohlraum 14 eingelegten ringförmigen Polschuhs 16. Als nächstes Teil wird in den Hohlraum 14 ein gleichfalls ringförmiger Permanent-Magnet 5 und schließlich ein im Schnittbild T-förmig dargestellter Anker 6 eingelegt, dessen Ankerzapfen 18 in der Einbaulage etwa mit der Unterkante des Polschuhs 16 abschließt. Ein über die nach außen gerichtete Ankerstirnfläche 19 vorstehender Rand 20 des Gehäuses 3 wird nach innen umgebördelt und hält somit die in das Gehäuse 3 eingelegten Teile in einer unveränderbar definierten Lage zu den sonst durch die Bauform der Vorsteuerstufe 1 bestimmten weiteren Funktionsebenen. Eine dieser vorerwähnten Funktionsebenen wird gebildet durch die Positionierung einer mit einer Austrittsöffnung 21 einer Steuerluft-Düse 22 zusammenwirkenden Fläche 23 einer Prallplatte 9. Die Prallplatte 9 in einer gemäß FIG. 1 dargestellten Ausbildungsform ist Teil eines einstückig ausgebildeten Spulenkörpers 8 und ist, wie bereits erwähnt, in der zentralen Bohrung 11 der scheibenförmigen Membranfeder 10 aufgenommen. Die Membranfeder 10 wird in einem Einstich 26 in der Innenwand des Gehäuses 3 gehalten. Damit ist die stromlose Ausgangslage der Tauchspule 7 im Luftspalt 17 des Magnetfeldes zwischen Polschuh 16 und Ankerzapfen 18 bestimmt und gleichzeitig die Position der wirksamen Fläche 23 der Prallplatte 9 bezogen auf das Gehäuse 3 definiert. Für eine stufenlose Feineinstellung der Lage der Vorsteuerstufe 1 zur Ventilhauptstufe 2 und gleichzeitig als Befestigungsmittel zur Verbindung mit der Ventilhauptstufe 2 ist an einem bundförmig erweiterten Teil der Gehäuseaußenwand der Vorsteuerstufe 1 ein Feingewinde 24 vorgesehen, mittels welchem sich die komplette Vorsteuerstufe 1 in eine auf der einen Stirnseite im Gehäuse 4 der Ventilhauptstufe 2 angeordnete Feingewindebohrung 25 einschrauben läßt. Aufgrund der Eigenschaft einer kleinen Steigung der Gewindegänge bei einem Feingewinde läßt sich die Vorsteuerstufe 1 und hier insbesondere die in fester Verbindung zu dem Gehäuse 3 positionierte Membranfeder 1o mit der Prallplatte 9 über einen relativ großen Verdrehweg mit entsprechend großer Genauigkeit an die Austrittsöffnung 21 der Düse 22 heranführen. Die Düse 22 ist in einer austauschbaren Düsenscheibe 27 vorgesehen, welche in das Gehäuse 4 in Auflage auf eine zylindrische Steuerbuchse 28 einlegbar ist. Um sicherzustellen, daß die Druckluft aus einem Steuerluftraum 29 ausschließlich über die Düse 22 austritt, ist bei einer Ausführungsform gemäß FIG. 1 zwischen Düsenscheibe 27 und Gehäuseunterkante 30 der Vorsteuerstufe 1 als flexible Zwischenlage ein elastomeres Dichtelement 31 vorgesehen, welches bei absoluter Dichtwirkung eine Einstellbarkeit der Position der Prallplatte 9 in der Vorsteuerstufe 1 zur Düse 22 in der Ventilhauptstufe 2 im Bereich eines wählbaren Arbeitspunktes gewährleistet. Aufgrund der mittels Feingewinde 24, 25 erzielbaren Justierbarkeit der gegenseitigen Positionen zwischen Prallplatte 9 und Düse 22 ist an sich die Einbauposition der Düsenscheibe 27 im Gehäuse 4 der Ventilhauptstufe 2 in ausreichenden Grenzen lageunempfindlich. Eine genaue Einstellung des Arbeitspunktes im Einzelfall erfolgt durch feinfühliges Einschrauben der Vorsteuerstufe 1 in das Gehäuse 4 der Ventilhauptstufe 2. Der Arbeitspunkt ist dann korrekt eingestellt, wenn sich unter den gegebenen Betriebsbedingungen im Ausgangssignal der Ventilhauptstufe 2 eine meßbare Veränderung ergibt. Um den Zustand der optimalen Arbeitspunkteinstellung zu fixieren, ist in den Gewindegang des Feingewindes 24, 25 zwischen den Gehäuseteilen 3 und 4 der Vorsteuerstufe 1 und der Ventilhauptstufe 2 ein nachhärtendes Schraubensicherungsmittel 32 eingegeben. Eine derart stoffschlüssige Schraubensicherung läßt sich erforderlichenfalls lösen, so daß auch eine Nachjustierung der Einstellung des Arbeitspunktes möglich ist. Ein anderes Sicherungsmittel zur Fixierung eines Arbeitspunktes ist, wie in FIG. 2 dargestellt ist, auch dadurch gegeben, daß seitlich in das Gehäuse 4 der Ventilhauptstufe 2 eine Gewindestiftschraube 33 eingelassen ist, mittels welcher nach Einstellung des Arbeitspunktes durch Kerbwirkung im Feingewinde 24 des Gehäuses 3 der Vorsteuerstufe 1 eine wieder lösbare, formschlüssige Verdrehsicherung herstellbar ist. Aufgrund des variabel einstellbaren Abstandes zwischen der Prallplatte 9 und der Düse 22 an einer in diesen Bereich gelegten Trennstelle zwischen Vorsteuerstufe 1 und Ventilhauptstufe 2 bleiben Aufwendungen hinsichtlich einer Einstellbarkeit und der nötigen Hilfsmittel weitgehend erspart. Die durch die Düse 22 und Durchbrüche 58 in der Membranfeder 1o in den Luftraum 34 um die Prallplatte 9 aus dem Steuerluftraum 29 ausströmende Steuerluft kann durch in die Seitenwände des Gehäuses 3 radial nach außen führende Bohrungen 35 und senkrecht dazu angelegte Nuten 36 unter atmosphärischen Bedingungen abfließen. Um im Bereich der Gewindegänge des Feingewindes 24 einen freibleibenden Querschnitt für die ungehindert abfließende Steuerluft zu gewährleisten, sind die Nuten 36 über den Grundkreis des Feingewindes 24 hinausgehend, beispielsweise tiefer gefräst.

Die Ventilhauptstufe 1 ist, wie aus der FIG. 1 hervorgeht, wie folgt aufgebaut: In dem Gehäuse 4 der Ventilhauptstufe 1 ist eine zylindrische Bohrung 37 vorgesehen, in die die Steuerbuchse 28 eingesetzt ist. Die Steuerbuchse 28 weist Außenringnuten 38, 39, 4o auf, die in Einbaulage mit Bohrungen 41, 42, 43 für die Anbringung von Anschlußleitungen in Verbindung stehen. Die Lage der Steuerbuchse 28 in der Bohrung 37 ist gesichert einerseits durch die Auflage auf einem Verschlußstück 44 mit einer zentralen Entlüftungsbohrung 45, welches durch einen Springring 46 in einer Nut 47 der zylindrischen Bohrung 37 im Gehäuse 4 axial gesichert ist. Auf der anderen, der Vorsteuerstufe 1 zugewandten Seite ist die Steuerbuchse 28 gesichert durch Anlage an die Düsenscheibe 27, die über das Dichtelement 31 durch die einwärts geschraubte Vorsteuerstufe 1 gegen die Steurbuchse 28 gepreßt wird. Die Außenringnuten 38, 39, 4o in der Steuerbuchse 28 kommunizieren über radial angelegte Bohrungen 48, 49, 5o mit Ringnuten 51, 53 in einem Steuerkolben 54 und einer Innenringnut 52 in der Steuerbuchse 28. Der Steuerkolben 54 ist axial beweglich in einer Zylinderbohrung 59 der Steuerbuchse 28 gelagert. Die Steuerbuchse 28 selbst ist mittels Dichtringen 6O gegen das Gehäuse 4 abgedichtet. In der Funktion als Stromsteuerventil beispielsweise dient die Bohrung 43 (P) für den Anschluß einer Primärdruckluftleitung, an die Bohrung 42 (A) wird die Sekundärdruckleitung oder Arbeitsdruckleitung angeschlossen, die Bohrung 41 (R) schließlich dient dem Anschluß der Abluft- oder Rückflußleitung. Für die Zuleitung von Steuerluft kommuniziert die ständig unter Primärdruckeinfluß stehende Ringnut 53 über einen Steuerluftkanal 55, der als zentrale Bohrung im Steuerkolben 54 angelegt ist, weiter über eine Steuerluftstromdrossel 56 mit dem Steuerluftraum 29 an dem der Vorsteuerstufe 1 zugewandten Ende des Steuerkolbens 54. Der Schubkraftwirkung auf den Steuerkolben 54 aufgrund eines variabel steuerbaren Druckes im Steuerluftraum 29 wirkt eine Druckfeder 57 entgegen, die sich auf dem Verschlußstück 44 abstützt. Zur Justierung der Druckfederkraft kann auch unter Beibehaltung einer Entlüftungsbohrung 45 eine von außen einstellbare, nicht näher angezeigte Verstellschraube vorgesehen sein.

In der Eigenschaft als Stromsteuerventil wird die Funktionsweise des beschriebenen Ausführungsbeispieles eines elektropneumatischen Servoventils nach der Darstellung gemäß FIG. 1 wie folgt erklärt: An die Bohrung 43 (P) ist beispielsweise die Anschlußleitung für den Primärdruck angelegt. Das durch Überdruck gekennzeichnete Medium Luft oder ein anderes Gas kann aufgrund der nach FIG. 1 dargestellten Position des Steuerkolbens 54 in der oberen Extremlage nicht als Arbeitslufttrom am Verbraucheranschluß bei A wirksam werden, da in besagter Position zwischen der Ringnut 53, die an sich ständig mit dem Versorgungsluftstromanschluß an der Bohrung 43 kommuniziert, und dem Verbraucheranschluß in A keine durchgängige Verbindung besteht. In der oberen Extremlage des Steuerkolbens 54 dagegen ist aufgrund der überlappend positionierten Ringnut 51 des Steuerkolbens 54 mit der Innenringnut 52 in der Steuerbuchse 28 die Ventilhauptstufe 2 auf einen maximalen Querschnitt des Verbraucheranschlusses bei A in Rückstromrichtung zum Anschluß R eingestellt. Diese Einstellung bleibt bei dem dargestellten Ausführungsbeispiel allgemein erhalten, solange nicht durch Anlegen von Versorgungsdruckluft die Voraussetzungen für eine Änderung der durch die Druckfeder 57 eingestellten Position des Steuerkolbens 54 gegeben sind. Eine Änderung der Position des Steuerkolbens 54 ist dann erreichbar, wenn dafür gesorgt ist, daß sich der Druck im Steuerluftraum 29 oberhalb des Steuerkolbens 54 so weit aufbaut, daß dieser als Stellkraft die Rückstellkraft der Druckfeder 57 überwindet und den Steuerkolben 54 gemäß FIG. 1 entsprechend nach unten verschiebt. Eine hierzu erforderliche Überleitung des Primärluftdruckes im Versorgungsanschluß bei P in den Steuerluftraum 29 erfolgt über eine ständige Verbindung der Bohrung 43 über die Außenringnut 40 und radiale Bohrungen 50 in der Steuerbuchse 28 mit der Ringnut 53, die ihrerseits über den Steuerluftkanal 55 und die Steuerluftstromdrossel 56 mit dem Steuerluftraum 29 in Verbindung steht. Will man einen am Verbraucheranschluß in A steuerbaren Luftstrom einstellen, so geschieht dies durch eine entsprechende Positionierung des Steuerkolbens 54. Aufgrund von elektrischen Eingangsstromsignalen erfolgt eine stromproportionale Ansteuerung der Tauchspule 7. Entsprechend der Bewegung der Tauchspule 7 wird die Prallplatte 9 beispielsweise gegen die Meßdüse 22 geführt, begrenzt oder vermindert dadurch das Ausströmen von Steuerluft aus dem Steuerluftraum 29 und erzeugt so im Steuerluftraum 29 einen auf die Stirnfläche des Steuerkolbens 54 wirksamen Steuerdruck von beispielsweise 1,5 bis 6 b. Der Steuerkolben 54 wird aufgrund dieses variabel einstellbaren Druckes entgegen der Druckfeder 57 ausgelenkt, derart daß nach Erreichen einer bestimmten Steuerkolbenposition mit zunehmendem Steuerdruck eine im Querschnitt gleichfalls zunehmend einstellbare Überlappung der unter Versorgungsdruck stehenden Ringnut 53 mit der Innenringnut 52 und damit mit dem Verbraucheranschluß bei A stattfindet. Vor einer wirksamen Verbindung des unter Primärdruck stehenden Versorgungsanschlusses in P mit dem Verbraucheranschluß in A wird die davor auf maximalen Durchlaßquerschnitt eingestellte Verbindung zwischen dem Verbraucheranschluß bei A und dem Rückflußanschluß in R geschlossen.

Wird der Signalstrom zur Ansteuerung der Tauchspule 7 zurückgenommen, so kehren sich die Verhältnisse entsprechend um;
d.h. der Arbeitsluftstrom am Verbraucheranschluß A wird dann
entsprechend gedrosselt und in der Fortsetzung die Verbindung
von P nach A schließlich geschlossen. Danach wiederum findet
ein Wechsel in der Verbindung des Verbraucheranschlusses A
auf den Abluft- oder Rückstromanschluß in R statt.

Wesentliche Merkmale für den Aufbau und die Wirkungsweise des
elektropneumatischen Servoventiles der angezeigten Art sind
darin zu sehen, daß es sich bei der gezeigten Einrichtung um
eine zweistufige Ventilsteuerung handelt, die aus einer elektropneumatischen Signalumformer- oder Vorsteuerstufe 1 und
einer durch letztere lastunabhängig einstellbaren Ventilhauptstufe 2 besteht. Mit der Vorsteuerstufe 1 als Servogerät
ist es möglich, mit kleinen elektrischen Steuerströmen bis
ca. 2oo mA indirekt den Volumenstrom einer Ventilhauptstufe 2
in einer Größenordnung von beispielsweise 5oo l/min. zu steuern. Ein ganz besonderer Vorteil dabei ist es, daß zwischen
dem elektrischen Signalstrom in der Tauchspule 7 und dem Volumenstrom am Verbraucherausgang in A ein proportionaler Zusammenhang besteht. Außerdem ist aufgrund der in der Vorsteuerstufe 1, der vornehmlich die Aufgabe einer elektrisch-pneumatischen Steuer-Signalumsetzung zukommt, bewegten kleinen Massen dem Servoventil eine schnelle Reaktionsweise, die zusätzlich auch eine genaue und über einen hohen Verstärkungseffekt
wirksame Auslösung von Steuervorgängen gewährleistet, zuerkennbar. Für die reaktionsschnelle und feindosierbare Steuerung der Druckverhältnisse im Steuerluftraum 29 der Ventilhauptstufe 2 ist das Zusammenwirken des elektrischen Signalumsetzers in der Ausbildungsform der Vorsteuerstufe 1 einschl.
der Prallplatte 9 mit der an der Trennstelle auf Seiten der
Ventilhauptstufe 2 angeordneten Meßdüse 22 in der Düsenscheibe 27 verantwortlich. Eine Voraussetzung für einen optimalen
Steuerungseffekt in der Umsetzung von elektrischen Steuerungssignalen in einen pneumatischen Steuerungsluftdruck, über welchen schließlich an den Verbraucherabgängen proportionale und in großen Druckluftmengen Volumenströme in fein dosierbarer Abstimmung steuerbar sind, ist eine exakte Einstellbarkeit der Arbeitspunkte in Bereichen um 1/1oo mm. Durch das Feingewinde 24, 25 an den Gehäusen 3 und 4 der Vorsteuerstufe 1 und der Ventilhauptstufe 2 läßt sich, auch in der Einbaulage der Ventilhauptstufe 2, der Arbeitspunkt durch das Heranführen der Prallplatte an die Düse 22 mit höchster Präzision einstellen und individuell auf die gegebenen Bedingungen abstimmen. Bei der Wahl eines optimalen Arbeitspunktes bzw. einer funktional günstigen Ausgangslage der Prallplatte 9 ist es auch vorteilhaft, letztere, ausgehend aus einer Mittelstellung bezogen auf den Steuerungseffekt, anzusteuern, so daß mittels eines Ansteuerstromes von beispielsweise plus 1oo mA nach minus 1oo mA für die ganze Bewegungsphase der Prallplatte 9 eine maximale Stromstärke in der Tauchspule 9 von effektiv 1oo mA nicht überschritten wird. Bei einer Basiseinstellung der Prallplatte 9 stromlos auf eine Mittenstellung des Steuerdruckes bei ca. 3,5 b innerhalb einer beispielsweisen Steuerdruckphasenbreite zwischen 1,5 und 6 b ist mit der Einstellbarkeit des Arbeitspunktes über das Feingewinde 24, 25 in stufenloser Abstimmung und in der Einbaulage realisierbar. Der daraus resultierende Vorteil liegt darin, daß die effektiven Tauchspulenströme kleingehalten und damit eine minimale Baugröße sowie aufgrund der geringen bewegten Massen ein verbessertes dynamisches Verhalten erzielbar ist. Es bleibt noch darauf hinzuweisen, daß anstelle von Luft auch andere gasförmige Medien als Druck- oder Strömungselemente anwendbar sind, ohne dadurch die Funktionsweise des erklärten elektropneumatischen Servoventils erheblich einzuschränken. Schließlich ist es auch unerheblich, die Vorsteuerstufe 1 abweichend von der axialen Anordnung zur Ventilhauptstufe 2 nach FIG. 1 in einer Ebene quer zur Ventilhauptstufe 2 anzuordnen.

Patentansprüche:

1. Elektropneumatisches Servoventil zur Steuerung eines Volumenstromes bzw. eines Druckes, gekennzeichnet durch die Kombination einer elektrische Signale in pneumatischen Steuerluftdruck umsetzenden Vorsteuerstufe (1) mit einer durch den Steuerluftdruck der Vorsteuerstufe (1) einstellbaren Ventilhauptstufe (2), dergestalt daß mittels eines durch elektrische Signale über ein Düse-Prallplatte-System (22, 9, 56) in proportional pneumatischen Druck umsetzbaren Steuerluftdruckes in einem Steuerluftraum (29) zwischen Vorsteuerstufe (1) und Ventilhauptstufe (2) ein Steuerkolben (54) der Ventilhauptstufe (2) gegen die Wirkung einer Rückstellkraft (57) antreibbar ist, derart daß in Abhängigkeit des Steuerluftdruckes der Steuerkolben (54) zur Steuerung eines proportionalen Volumenstromes positionierbar ist.

2. Elektropneumatisches Servoventil nach Anspruch 1, dadurch gekennzeichnet, daß im Steuerkolben (54) ein Steuerluftkanal (55) vorgesehen ist, der eine mit dem Primärluftdruckanschluß (P) kommunizierende Ringnut (53) im Steuerkolben (54) mit dem Steuerluftraum (29) zwischen einer Meßdüsenscheibe (27) und dem Steuerkolben (54) verbindet, derart daß ein Primärluftdruck über den Steuerluftkanal (55) und eine Steuerluftstromdrossel (56) einen Druck im Steuerluftraum (29) zwischen dem Steuerkolben (54) und der Meßdüsenscheibe (27) aufbaut, daß dieser Druck mittels einer den über eine Meßdüse (22) ausströmenden Steuerluftstrom dosierenden Prallplatte (9) steuerbar ist, derart daß in Abhängigkeit von dem veränderbaren Druck im Steuerluftraum (29) der Steuerkolben (54)
auf einen den proportionalen Volumenstrom am Arbeitsluftstromausgang (A) gewährleistenden Öffnungsquerschnitt
einstellbar ist.

3. Elektropneumatisches Servoventil nach den Ansprüchen
1 und 2,
dadurch gekennzeichnet,
daß der Abstand der Prallplatte (9) von der Meßdüse (22)
ausgehend von einer Position der Prallplatte (9) in einem
gewählten Arbeitspunkt durch Bestromung einer mit ihr verbundenen Tauchspule (7) im Magnetfeld zwischen einem Polschuh (16) und einem Anker (6) der Vorsteuerstufe (1)
stromproportional oder spannungsproportional einstellbar
und damit der Druck im Steuerluftraum (29) steuerbar ist.

4. Elektropneumatisches Servoventil nach den Ansprüchen
1 und 2,
dadurch gekennzeichnet,
daß bei einer Anordnung der Ventilhauptstufe (2) zur
Steuerung eines Volumenstromes und Druckes die mit dem
Primärdruckanschluß P (43) kommunizierende Ringnut (53)
des Steuerkolbens (54) in steuerdruckfreiem Zustand aufgrund der durch Federdruck (57) in eine Endlage einstellbaren Position des Steuerkolbens (54) geschlossen bleibt,
während eine vom Arbeitsanschluß (A) an eine Rückstromleitung (R) herstellbare Verbindung auf den maximalen
Öffnungsquerschnitt eingestellt ist.

5. Elektropneumatisches Servoventil nach den Ansprüchen
1 bis 4,
dadurch gekennzeichnet,
daß die Ringnuten (53 und 51) des Steuerkolbens (54) in Abhängigkeit der Beaufschlagung der Tauchspule (7) mit elektrischen Stromsignalen wechselwirksam einstellbar mit dem Arbeitsanschluß (A) kommunizieren, derart daß ein proportional zu den Stromsignalen veränderbarer Zweiweg-Volumenstrom am Arbeitsanschluß (A) steuerbar ist.

FIG. 1

FIG. 2